# EUROPÄISCHE PATENTSCHRIFT

(11) **EP 3 552 262 B1**
(45) Veröffentlichungstag und Bekanntmachung des Hinweises auf die Patenterteilung: **06.01.2021**
(21) Anmeldenummer: 17805216.3
(22) Anmeldetag: 30.11.2017
(51) Int. Cl.: H01M 8/04119, H01M 8/0258, H01M 8/2483, H01M 8/1018

(54) **BRENNSTOFFZELLE**
FUEL CELL
PILE A COMBUSTIBLE

(30) Priorität: 12.12.2016 DE 102016224676
(43) Veröffentlichungstag der Anmeldung: 16.10.2019
(73) Patentinhaber: Robert Bosch GmbH, 70442 Stuttgart (DE)
(72) Erfinder: SCHULTE MOENTING, Martin, 70193 Stuttgart (DE)
(86) Internationale Anmeldenummer: PCT/EP2017/080965
(87) Internationale Veröffentlichungsnummer: WO 2018/108547

(56) Entgegenhaltungen:
- DE-A1-102013 226 815
- DE-B4-112007 001 059
- DE-T5-112013 001 654

## Beschreibung

Die Erfindung betrifft eine Brennstoffzelle, welche mindestens eine Membran-Elektrodeneinheit mit einer ersten Elektrode und einer zweiten Elektrode, welche voneinander durch eine Membran getrennt sind, und mindestens zwei Bipolarplatten, die sich beidseitig an die Membran-Elektrodeneinheit anschließen, umfasst. Dabei sind die Bipolarplatten von einem ersten Zufuhrkanal zur Zufuhr eines Brennstoffs und von einem zweiten Zufuhrkanal zur Zufuhr eines Oxidationsmittels durchbrochen.

### Stand der Technik

Eine Brennstoffzelle ist eine galvanische Zelle, welche die chemische Reaktionsenergie eines kontinuierlich zugeführten Brennstoffes und eines Oxidationsmittels in elektrische Energie wandelt. Eine Brennstoffzelle ist also ein elektrochemischer Energiewandler. Bei bekannten Brennstoffzellen werden insbesondere Wasserstoff (H2) und Sauerstoff (O2) in Wasser (H2O), elektrische Energie und Wärme gewandelt. Es sind aber auch Brennstoffzellen bekannt, welche mit Methanol oder Methan arbeiten.

Unter anderem sind Protonenaustauschmembran (Proton-Exchange-Membran = PEM) -Brennstoffzellen bekannt. Protonenaustauschmembran-Brennstoffzellen weisen eine zentral angeordnete Membran auf, die für Protonen, also für Wasserstoffionen, durchlässig ist. Das Oxidationsmittel, insbesondere Luftsauerstoff, ist dadurch räumlich von dem Brennstoff, insbesondere Wasserstoff, getrennt.

Protonenaustauschmembran-Brennstoffzellen weisen ferner eine Anode und eine Kathode auf. Der Brennstoff wird an der Anode der Brennstoffzelle zugeführt und katalytisch unter Abgabe von Elektronen zu Protonen oxidiert. Die Protonen gelangen durch die Membran zu der Kathode. Die abgegebenen Elektronen werden aus der Brennstoffzelle abgeleitet und fließen über einen externen Stromkreis zu der Kathode.

Das Oxidationsmittel wird an der Kathode der Brennstoffzelle zugeführt und es reagiert durch Aufnahme der Elektronen aus dem externen Stromkreis und Protonen, die durch die Membran zur Kathode gelangt sind, zu Wasser. Das so entstandene Wasser wird aus der Brennstoffzelle abgeleitet. Die Bruttoreaktion lautet:

O₂ + 4H⁺ + 4e⁻ → 2H₂O

Zwischen der Anode und der Kathode der Brennstoffzelle liegt dabei eine Spannung an. Zur Erhöhung der Spannung können mehrere Brennstoffzellen mechanisch hintereinander zu einem Brennstoffzellenstapel angeordnet und elektrisch in Reihe geschaltet werden.

Zur gleichmäßigen Verteilung des Brennstoffs an der Anode sowie zur gleichmäßigen Verteilung des Oxidationsmittels an der Kathode sind Verteilerplatten vorgesehen, welche auch als Bipolarplatten bezeichnet werden. Die Bipolarplatten weisen beispielsweise kanalartige Strukturen zur Verteilung des Brennstoffs sowie des Oxidationsmittels auf. Die Bipolarplatten können ferner Strukturen zur Durchleitung einer Kühlflüssigkeit durch die Brennstoffzelle zur Abführung von Wärme aufweisen.

Aus der DE 10 2013 226 815 A1 ist eine Brennstoffzelle mit einer zwischen zwei Bipolarplatten angeordneten Membran-Elektrodeneinheit bekannt. Dabei weisen die Bipolarplatten jeweils Verteilstrukturen zur Verteilung der Reaktionsgase an die Elektroden auf. Die DE 11 2013 001654 T5 offenbart eine weitere derartige Brennstoffzelle.

Die Membran der Membran-Elektrodeneinheit muss dabei feucht gehalten werden damit die Brennstoffzelle ordnungsgemäß funktioniert. Insbesondere bei Betrieb der Brennstoffzelle bei verhältnismäßig hoher Temperatur kann die Membran aufgrund der erhöhten Wasseraufnahmefähigkeit der Luft austrocknen, wodurch die Funktion der Brennstoffzelle beeinträchtigt werden kann.

### Offenbarung der Erfindung

Es wird eine Brennstoffzelle vorgeschlagen, welche mindestens eine Membran-Elektrodeneinheit mit einer ersten Elektrode und einer zweiten Elektrode, welche voneinander durch eine Membran getrennt sind, und mindestens zwei Bipolarplatten umfasst, die sich beidseitig an die Membran-Elektrodeneinheit anschließen. Dabei sind die Bipolarplatten von einem ersten Zufuhrkanal zur Zufuhr eines Brennstoffs und von einem zweiten Zufuhrkanal zur Zufuhr eines Oxidationsmittels durchbrochen. Eine erste Verteilstruktur zur Verteilung des Brennstoffs, die der ersten Elektrode zugewandt ist, schließt sich an eine erste Kante des ersten Zufuhrkanals an und eine zweite Verteilstruktur zur Verteilung des Oxidationsmittels, die der zweiten Elektrode zugewandt ist, schließt sich an eine zweite Kante des zweiten Zufuhrkanals an.

Die erste Elektrode wird auch als Anode bezeichnet und die zweite Elektrode wird auch als Kathode bezeichnet. Bei dem Brennstoff handelt es sich beispielsweise um Wasserstoff und das Oxidationsmittel ist beispielsweise Sauerstoff, insbesondere in der Umgebungsluft enthaltener Sauerstoff.

Erfindungsgemäß erstreckt die erste Elektrode sich an der Membran entlang in einem Bereich, welcher von der ersten Kante des ersten Zufuhrkanals beabstandet ist und die zweite Elektrode erstreckt sich an der Membran entlang in einem Bereich, welcher von der zweiten Kante des zweiten Zufuhrkanals beabstandet ist.

Die zentral angeordnete Membran überragt also die beidseitig aufgebrachten Elektroden. Die Membran weist somit beidseitig Bereiche auf, welche dem ersten Zufuhrkanal sowie dem zweiten Zufuhrkanal benachbart gelegen sind, die unmittelbar an die erste Verteilstruktur oder an die zweite Verteilstruktur angrenzen und dabei frei von den Elektroden sind.

Brennstoff, der über den ersten Zufuhrkanal und die erste Verteilstruktur zu der ersten Elektrode geleitet wird, strömt somit auch über Bereiche der Membran und kann somit Feuchtigkeit in Form von Wasserdampf unmittelbar zu der Membran transportieren. Oxidationsmittel, das über den zweiten Zufuhrkanal und die zweite Verteilstruktur zu der zweiten Elektrode geleitet wird, strömt somit auch über Bereiche der Membran und kann somit Feuchtigkeit in Form von Wasserdampf unmittelbar zu der Membran transportieren.

Bevorzugt ist die Membran auch für Wasserdampf durchlässig. Damit kann Feuchtigkeit in Form von Wasserdampf von der ersten Verteilstruktur durch die Membran hindurch zu der zweiten Verteilstruktur und auch von der zweiten Verteilstruktur durch die Membran hindurch zu der ersten Verteilstruktur transportiert werden.

Gemäß einer vorteilhaften Ausgestaltung der Erfindung sind die Bipolarplatten von einem ersten Abfuhrkanal zur Abfuhr des Brennstoffs durchbrochen, wobei die erste Verteilstruktur sich an eine erste Kante des ersten Abfuhrkanals anschließt. Der erste Abfuhrkanal dient zur Abfuhr von nicht verbrauchtem Brennstoff aus der ersten Verteilstruktur. Dabei erstreckt die erste Elektrode sich an der Membran entlang in einem Bereich, welcher auch von der ersten Kante des ersten Abfuhrkanals beabstandet ist. Die Membran weist somit auch einen Bereich auf, welcher dem ersten Abfuhrkanal benachbart gelegen ist, der unmittelbar an die erste Verteilstruktur angrenzt und dabei frei von der ersten Elektrode ist.

Die erste Verteilstruktur weist vorzugsweise einen an die erste Kante des ersten Zufuhrkanals anschließenden ersten Einströmbereich und einen an die erste Kante des ersten Abfuhrkanals anschließenden ersten Ausströmbereich auf. Dabei ist zwischen dem ersten Einströmbereich und dem ersten Ausströmbereich ein erster Hauptverteilbereich angeordnet, welcher einen rechteckigen Querschnitt aufweist.

Bevorzugt erstreckt die erste Elektrode sich an der Membran entlang in einem Bereich, welcher von dem ersten Einströmbereich und von dem ersten Ausströmbereich beabstandet ist. Die erste Elektrode grenzt somit nur an den ersten Hauptverteilbereich der ersten Verteilstruktur an.

Gemäß einer vorteilhaften Ausgestaltung der Erfindung sind die Bipolarplatten von einem zweiten Abfuhrkanal zur Abfuhr des Oxidationsmittels durchbrochen, wobei die zweite Verteilstruktur sich an eine zweite Kante des zweiten Abfuhrkanals anschließt. Der zweite Abfuhrkanal dient zur Abfuhr von nicht verbrauchtem Oxidationsmittel aus der zweiten Verteilstruktur. Dabei erstreckt die zweite Elektrode sich an der Membran entlang in einem Bereich, welcher auch von der zweiten Kante des zweiten Abfuhrkanals beabstandet ist. Die Membran weist somit auch einen Bereich auf, welcher dem zweiten Abfuhrkanal benachbart gelegen ist, der unmittelbar an die zweite Verteilstruktur angrenzt und dabei frei von der zweiten Elektrode ist.

Die zweite Verteilstruktur weist vorzugsweise einen an die zweite Kante des zweiten Zufuhrkanals anschließenden zweiten Einströmbereich und einen an die zweite Kante des zweiten Abfuhrkanals anschließenden zweiten Ausströmbereich auf. Dabei ist zwischen dem zweiten Einströmbereich und dem zweiten Ausströmbereich ein zweiter Hauptverteilbereich angeordnet, welcher einen rechteckigen Querschnitt aufweist.

Bevorzugt erstreckt die zweite Elektrode sich an der Membran entlang in einem Bereich, welcher von dem zweiten Einströmbereich und von dem zweiten Ausströmbereich beabstandet ist. Die zweite Elektrode grenzt somit nur an den zweiten Hauptverteilbereich der zweiten Verteilstruktur an.

Vorzugsweise sind die Elektroden deckungsgleich an der Membran angeordnet. Die erste Elektrode und die zweite Elektrode weisen also einen gleichartigen Querschnitt auf und sind an gegenüberliegenden Bereichen der Membran angebracht. Die Membran-Elektrodeneinheit ist somit spiegelsymmetrisch ausgestaltet.

Eine erfindungsgemäße Brennstoffzelle findet vorteilhaft Verwendung in einem Elektrofahrzeug (EV).

### Vorteile der Erfindung

Durch die erfindungsgemäße Ausgestaltung der Brennstoffzelle werden Bereiche auf der Membran erzeugt, die unmittelbar an die Verteilstrukturen angrenzen und die frei von Elektroden sind. Dadurch kann die Membran der Membran-Elektrodeneinheit stets ausreichend befeuchtet werden. Auch bei Betrieb der Brennstoffzelle bei verhältnismäßig hoher Temperatur kann eine Austrocknung der Membran vermieden werden. Dabei kann ein externer Befeuchter zur Befeuchtung der Membran kleiner ausgelegt werden oder es ist keine Befeuchtung der Membran durch einen externen Befeuchter erforderlich, wodurch Platz und Kosten eingespart werden.

In die zweite Verteilstruktur einströmende Luft wird bereits vor Erreichen der Kathode erwärmt. Dadurch wird bereits vor der Kathode durch ein Dampfdruckgefälle Wasser von der ersten Verteilstruktur durch die Membran in die zweite Verteilstruktur übertragen. Dieser Vorgang findet in der ersten Verteilstruktur hinter der Anode statt. In der ersten Verteilstruktur bleibt daher mehr Weg sowie Zeit, um Wasser durch die Membran in die zweite Verteilstruktur abzugeben. Die hinter der Kathode mit Reaktionswasser angereicherte Luft hat zusätzlichen Weg sowie Zeit, um Wasser durch die Membran in die erste Verteilstruktur zu übertragen. In der ersten Verteilstruktur wird bereits vor der Anode, der einströmende Wasserstoff erwärmt und hat zusätzlichen Weg sowie Zeit, um Wasser von der zweiten Verteilstruktur aufzunehmen.

### Kurze Beschreibung der Zeichnungen

Ausführungsformen der Erfindung werden anhand der Zeichnungen und der nachfolgenden Beschreibung näher erläutert.

Es zeigen:
- Figur 1: eine Explosionsdarstellung einer Brennstoffzelle,
- Figur 2: einen Schnitt durch die zusammengesetzte Brennstoffzelle entlang den Schnittlinien A - A aus Figur 1 und
- Figur 3: einen Schnitt durch die zusammengesetzte Brennstoffzelle entlang der Schnittlinie B - B aus Figur 2.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

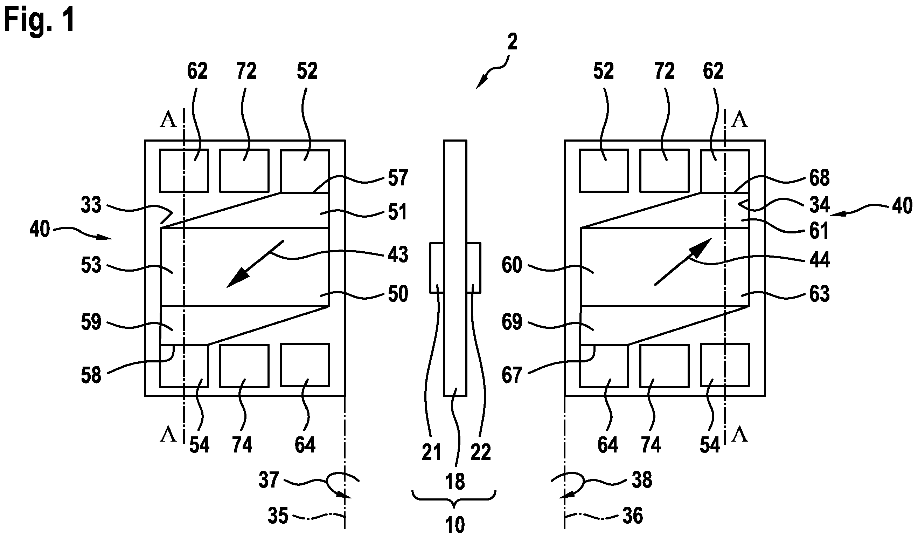

In Fig. 1 ist eine Explosionsdarstellung einer erfindungsgemäßen Brennstoffzelle 2 dargestellt. Die Brennstoffzelle 2 weist eine Membran-Elektrodeneinheit 10 auf, die eine ersten Elektrode 21, eine zweite Elektrode 22 und eine Membran 18 umfasst. Die beiden Elektroden 21, 22 sind auf einander gegenüber liegenden Seiten der Membran 18 angeordnet und somit voneinander durch die Membran 18 getrennt. Die erste Elektrode 21 wird im Folgenden auch als Anode 21 bezeichnet und die zweite Elektrode 22 wird im Folgenden auch als Kathode 22 bezeichnet.

Die Elektroden 21, 22 sind vorliegend deckungsgleich an der Membran 18 angeordnet. Die Anode 21 und die Kathode 22 weisen dabei einen gleichartigen Querschnitt auf und sind an gegenüberliegenden Bereichen der Membran 18 angebracht. Die Membran-Elektrodeneinheit 10 ist somit spiegelsymmetrisch ausgestaltet. Die zentral angeordnete Membran 18 überragt dabei die beidseitig aufgebrachten Elektroden 21, 22.

Die Membran 18 ist vorliegend als Polymerelektrolytmembran ausgebildet. Die Membran 18 ist für Wasserstoffionen, also H⁺-Ionen, durchlässig. Ebenso ist die Membran 18 auch für Wasserdampf durchlässig. Insbesondere Reaktionswasser, das bei der in der Brennstoffzelle 2 stattfindenden Reaktion an der Kathode 22 entsteht, kann somit in die Membran 18 und durch die Membran 18 hindurch zu der Anode 21 diffundieren.

Die Brennstoffzelle 2 weist ferner zwei Bipolarplatten 40 auf, die sich beidseitig an die Membran-Elektrodeneinheit 10 anschließen. Die Bipolarplatten 40 sind hier jeweils in einer Draufsicht dargestellt. Dabei ist von einer Bipolarplatte 40 eine erste Oberfläche 33 dargestellt, welche im zusammengebauten Zustand der Brennstoffzelle 2 der Anode 21 zugewandt ist. Von der anderen Bipolarplatte 40 ist eine zweite Oberfläche 34 dargestellt, welche im zusammengebauten Zustand der Brennstoffzelle 2 der Kathode 22 zugewandt ist.

Beim Zusammenbau der Brennstoffzelle 2 muss die eine Bipolarplatte 40, deren erste Oberfläche 33 dargestellt ist, somit um eine erste Achse 35 in eine erste Drehrichtung 37 um 90° gedreht werden. Die andere Bipolarplatte 40, deren zweite Oberfläche 34 dargestellt ist, muss beim Zusammenbau der Brennstoffzelle 2 um eine zweite Achse 36 in eine zweite Drehrichtung 38 um 90° gedreht werden.

Die beiden Bipolarplatten 40 sind von einem ersten Zufuhrkanal 52 zur Zufuhr eines Brennstoffs und von einem zweiten Zufuhrkanal 64 zur Zufuhr eines Oxidationsmittels durchbrochen. Ferner sind die beiden Bipolarplatten 40 von einem ersten Abfuhrkanal 54 zur Abfuhr von nicht verbrauchtem Brennstoff und von einem zweiten Abfuhrkanal 62 zur Abfuhr von nicht verbrauchtem Oxidationsmittel sowie von Wasser durchbrochen. Die beiden Bipolarplatten 40 sind auch von einem dritten Zufuhrkanal 74 zur Zufuhr eines Kühlmittels und von einem dritten Abfuhrkanal 72 zur Abfuhr des Kühlmittels durchbrochen sind. Das Kühlmittel dient zum Kühlen der Brennstoffzelle 2 im Betrieb.

Der erste Zufuhrkanal 52, der zweite Abfuhrkanal 62 und der dritten Abfuhrkanal 72 sind dabei an einer Kopfseite der Bipolarplatten 40 eingebracht. Der zweite Zufuhrkanal 64, der erste Abfuhrkanal 54 und der dritte Zufuhrkanal 74 sind an einer gegenüberliegenden Fußseite eingebracht. Im Betrieb der Brennstoffzelle 2 fließt der Brennstoff somit von der Kopfseite zu der Fußseite und das Oxidationsmittel sowie das Kühlmittel fließen in die entgegengesetzte Richtung von der Fußseite zu der Kopfseite.

Die Bipolarplatten 40 umfassen jeweils eine erste Verteilstruktur 50 zur Verteilung des Brennstoffs, die auf der ersten Oberfläche 33 angeordnet und der Anode 21 zugewandt ist. Die erste Verteilstruktur 50 erstreckt sich von einer ersten Kante 57 des ersten Zufuhrkanals 52 bis zu einer ersten Kante 58 des ersten Abfuhrkanals 54. Der Brennstoff fließt in Betrieb der Brennstoffzelle 2 von dem ersten Zufuhrkanal 52 zu dem ersten Abfuhrkanal 54 in eine erste Strömungsrichtung 43.

Die erste Verteilstruktur 50 weist einen ersten Einströmbereich 51, welcher an die erste Kante 57 des ersten Zufuhrkanals 52 anschließt, und einen ersten Ausströmbereich 59, welcher an die erste Kante 58 des ersten Abfuhrkanals 54 anschließt, auf. Zwischen dem ersten Einströmbereich 51 und dem ersten Ausströmbereich 59 ein erster Hauptverteilbereich 53 angeordnet, welcher einen rechteckigen Querschnitt aufweist.

Die Bipolarplatten 40 umfassen jeweils eine zweite Verteilstruktur 60 zur Verteilung des Oxidationsmittels, die auf der zweiten Oberfläche 34 angeordnet und der Kathode 22 zugewandt ist. Die zweite Verteilstruktur 60 erstreckt sich von einer zweiten Kante 67 des zweiten Zufuhrkanals 64 bis zu einer zweiten Kante 68 des zweiten Abfuhrkanals 62. Das Oxidationsmittel fließt in Betrieb der Brennstoffzelle 2 von dem zweiten Zufuhrkanal 64 zu dem zweiten Abfuhrkanal 62 in eine zweite Strömungsrichtung 44.

Die zweite Verteilstruktur 60 weist einen zweiten Einströmbereich 69, welcher an die zweite Kante 67 des zweiten Zufuhrkanals 64 anschließt, und einen zweiten Ausströmbereich 61, welcher an die zweite Kante 68 des zweiten Abfuhrkanals 62 anschließt, auf. Zwischen dem zweiten Einströmbereich 69 und dem zweiten Ausströmbereich 61 ein zweiter Hauptverteilbereich 63 angeordnet, welcher einen rechteckigen Querschnitt aufweist.

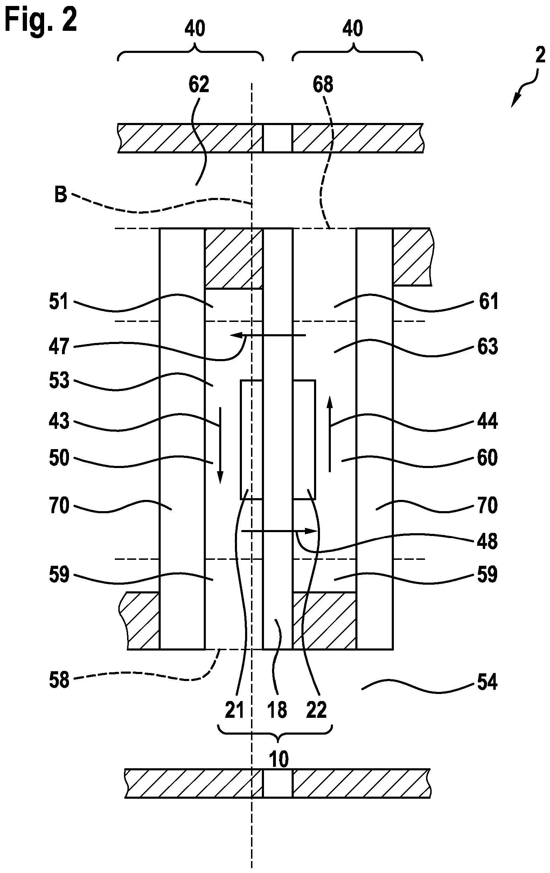

In Figur 2 ist ein Schnitt durch die zusammengesetzte Brennstoffzelle 2 entlang den Schnittlinien A - A aus Figur 1 dargestellt. Die Brennstoffzelle 2 ist dabei Teil eines Brennstoffzellenstapels, welcher aus jeweils abwechselnd angeordneten Bipolarplatten 40 und Membran-Elektrodeneinheiten 10 aufgebaut ist. Die Bipolarplatten 40 und die Membran-Elektrodeneinheit 10 sind derart angeordnet, dass die Anode 21 der ersten Verteilstruktur 50 der einen Bipolarplatte 40 zugewandt ist, und dass die Kathode 22 der zweiten Verteilstruktur 60 der anderen Bipolarplatte 40 zugewandt ist.

Die Bipolarplatten 40 umfassen eine dritte Verteilstruktur 70, welche sich von dem hier nicht sichtbaren dritten Zufuhrkanal 74 zu dem hier ebenfalls nicht sichtbaren dritten Abfuhrkanal 72 erstreckt. Die dritte Verteilstruktur 70 ist dabei jeweils zwischen der ersten Verteilstruktur 50 und der zweiten Verteilstruktur 60 angeordnet und dient zur Durchleitung des Kühlmittels durch die Bipolarplatte 40 und durch die Brennstoffzelle 2.

Die Anode 21 erstreckt sich an der Membran 18 entlang in einem Bereich, welcher von der hier nicht sichtbaren ersten Kante 57 des ersten Zufuhrkanals 52 und von der ersten Kante 58 des ersten Abfuhrkanals 54 beabstandet ist. Insbesondere erstreckt die Anode 21 an der Membran 18 entlang in einem Bereich, welcher von dem ersten Einströmbereich 51 und von dem ersten Ausströmbereich 59 beabstandet ist. Die Anode 21 grenzt somit nur an den ersten Hauptverteilbereich 53 der ersten Verteilstruktur 50 an und ragt in diesen hinein.

Die Membran 18 weist somit auf der Seite der Anode 21 einen Bereich auf, welcher dem ersten Zufuhrkanal 52 benachbart gelegen ist und dabei frei von der Anode 21 ist. Die Membran 18 weist somit auch einen Bereich auf, welcher dem ersten Abfuhrkanal 54 benachbart gelegen ist und dabei frei von der Anode 21 ist. Diese beiden Bereiche, die frei von der Anode 21 sind, grenzen unmittelbar an die erste Verteilstruktur 50 an.

Die Kathode 22 erstreckt sich an der Membran 18 entlang in einem Bereich, welcher und von der hier nicht sichtbaren zweiten Kante 67 des zweiten Zufuhrkanals 64 und von der zweiten Kante 68 des zweiten Abfuhrkanals 62 beabstandet ist. Insbesondere erstreckt sich die Kathode 22 an der Membran 18 entlang in einem Bereich, welcher von dem zweiten Einströmbereich 69 und von dem zweiten Ausströmbereich 61 beabstandet ist. Die Kathode 22 grenzt somit nur an den zweiten Hauptverteilbereich 63 der zweiten Verteilstruktur 60 an und ragt in diesen hinein.

Die Membran 18 weist somit auf der Seite der Kathode 22 einen Bereich auf, welcher dem zweiten Zufuhrkanal 64 benachbart gelegen ist und dabei frei von der Kathode 22 ist. Die Membran 18 weist somit auch einen Bereich auf, welcher dem zweiten Abfuhrkanal 62 benachbart gelegen ist und dabei frei von der Kathode 22 ist. Diese beiden Bereiche, die frei von der Kathode 22 sind, grenzen unmittelbar an die zweite Verteilstruktur 60 an.

Im Betrieb der Brennstoffzelle 2 wird Brennstoff über den ersten Zufuhrkanal 52 und die erste Verteilstruktur 50 zu der Anode 21 und weiter zu dem ersten Abfuhrkanal 54 geleitet. Dabei strömt der Brennstoff in der ersten Strömungsrichtung 43 auch über die Bereiche der Membran 18, welche frei von der Anode 21 sind.

Im Betrieb der Brennstoffzelle 2 wird Oxidationsmittel über den zweiten Zufuhrkanal 64 und die zweite Verteilstruktur 60 zu der Kathode 22 und weiter zu dem zweiten Abfuhrkanal 62 geleitet. Dabei strömt das Oxidationsmittel in der zweiten Strömungsrichtung 44 auch über die Bereiche der Membran 18, welche frei von der Kathode 22 sind.

Der Brennstoff, vorliegend Wasserstoff, wird an der Anode 21 katalytisch unter Abgabe von Elektronen zu Protonen oxidiert. Die Protonen gelangen durch die Membran 18 zu der Kathode 22. Die abgegebenen Elektronen werden aus der Brennstoffzelle 2 abgeleitet und fließen über einen externen Stromkreis zu der Kathode 22. Das Oxidationsmittel, vorliegend Luftsauerstoff, reagiert durch Aufnahme der Elektronen aus dem externen Stromkreis und Protonen, die durch die Membran 18 zu der Kathode 22 gelangt sind, zu Wasser.

Das Wasser, das bei der in der Brennstoffzelle 2 stattfindenden Reaktion an der Kathode 22 entsteht, kann teilweise von der zweiten Verteilstruktur 60 in eine erste Diffusionsrichtung 47 in die Membran 18 und durch die Membran 18 hindurch in die erste Verteilstruktur 50 und zu der Anode 21 diffundieren. Das in die erste Diffusionsrichtung 47 diffundierte Wasser wird dabei von dem in der ersten Verteilstruktur 50 fließenden Brennstoff aufgenommen.

Das von dem Brennstoff aufgenommene Wasser kann anschließend von der ersten Verteilstruktur 50 in eine zweite Diffusionsrichtung 48 in die Membran 18 und durch die Membran 18 hindurch in die zweite Verteilstruktur 60 und zu der Kathode 22 diffundieren. Das in die zweite Diffusionsrichtung 48 diffundierte Wasser wird dabei von dem in der zweiten Verteilstruktur 60 fließenden Oxidationsmittel aufgenommen.

Die Bereiche der Membran 18, welche frei von Elektroden 21, 22 sind und an die Verteilstrukturen 50, 60 angrenzen, ermöglichen somit eine ständige Diffusion von Wasser in die Membran 18 hinein und durch die Membran 18 hindurch. Dadurch wird die Membran 18 ständig befeuchtet. Überschüssiges Wasser wird, insbesondere aus der zweiten Verteilstruktur 60 über den zweiten Abfuhrkanal 62, aus der Brennstoffzelle 2 abgeleitet.

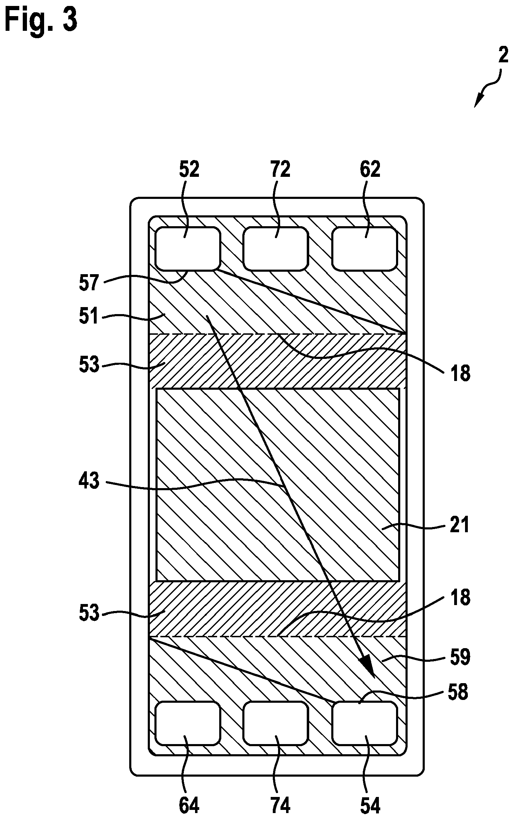

Figur 3 zeigt einen Schnitt durch die zusammengesetzte Brennstoffzelle 2 entlang der Schnittlinie B - B aus Figur 2. Die Membran 18 weist dabei einen zentral gelegenen Bereich auf, auf welchem die Anode 21 angeordnet ist. Die Membran 18 weist auch einen Bereich auf, welcher sich über einen Teil des ersten Hauptverteilbereichs 53 und über den ersten Einströmbereich 51 erstreckt, und welcher frei von der Anode 21 ist. Auch weist die Membran 18 einen Bereich auf, welcher sich über einen Teil des ersten Hauptverteilbereichs 53 und über den ersten Ausströmbereich 59 erstreckt, und welcher frei von der Anode 21 ist.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Brennstoffzelle (2), umfassend
mindestens eine Membran-Elektrodeneinheit (10) mit einer ersten Elektrode (21) und einer zweiten Elektrode (22), welche voneinander durch eine Membran (18) getrennt sind, und
mindestens zwei Bipolarplatten (40), die sich beidseitig an die Membran-Elektrodeneinheit (10) anschließen, wobei
die Bipolarplatten (40) von einem ersten Zufuhrkanal (52) zur Zufuhr eines Brennstoffs und von einem zweiten Zufuhrkanal (64) zur Zufuhr eines Oxidationsmittels durchbrochen sind, wobei
eine der ersten Elektrode (21) zugewandte erste Verteilstruktur (50) sich an eine erste Kante (57) des ersten Zufuhrkanals (52) anschließt, und eine der zweiten Elektrode (22) zugewandte zweite Verteilstruktur (60) sich an eine zweite Kante (67) des zweiten Zufuhrkanals (64) anschließt, wobei
die erste Elektrode (21) sich an der Membran (18) entlang in einem Bereich erstreckt, welcher von der ersten Kante (57) des ersten Zufuhrkanals (52) beabstandet ist, und wobei
die zweite Elektrode (22) sich an der Membran (18) entlang in einem Bereich erstreckt, welcher von der zweiten Kante (67) des zweiten Zufuhrkanals (64) beabstandet ist,
**dadurch gekennzeichnet, dass**
die Membran (18) beidseitig Bereiche aufweist, welche dem ersten Zufuhrkanal (52) sowie dem zweiten Zufuhrkanal (64) benachbart gelegen sind, die unmittelbar an die erste Verteilstruktur (50) oder an die zweite Verteilstruktur (60) angrenzen und frei von den Elektroden (21, 22) sind.

2. Brennstoffzelle (2) nach Anspruch 1, **dadurch gekennzeichnet, dass** die Membran (18) für Wasserdampf durchlässig ist.

3. Brennstoffzelle (2) nach einem der vorstehenden Ansprüche, **dadurch gekennzeichnet, dass**
die Bipolarplatten (40) von einem ersten Abfuhrkanal (54) zur Abfuhr des Brennstoffs durchbrochen sind, wobei
die erste Verteilstruktur (50) sich an eine erste Kante (58) des ersten Abfuhrkanals (54) anschließt, und
die erste Elektrode (21) sich an der Membran (18) entlang in einem Bereich erstreckt, welcher
von der ersten Kante (58) des ersten Abfuhrkanals (54) beabstandet ist.

4. Brennstoffzelle (2) nach Anspruch 3, **dadurch gekennzeichnet, dass** die erste Verteilstruktur (50)
einen an die erste Kante (57) des ersten Zufuhrkanals (52) anschließenden ersten Einströmbereich (51) und
einen an die erste Kante (58) des ersten Abfuhrkanals (54) anschließenden ersten Ausströmbereich (59) aufweist, wobei zwischen dem ersten Einströmbereich (51) und dem ersten Ausströmbereich (59) ein erster Hauptverteilbereich (53) angeordnet ist, welcher einen rechteckigen Querschnitt aufweist.

5. Brennstoffzelle (2) nach Anspruch 4, **dadurch gekennzeichnet, dass** die erste Elektrode (21) sich an der Membran (18) entlang in einem Bereich erstreckt, welcher
von dem ersten Einströmbereich (51) und von dem ersten Ausströmbereich (59) beabstandet ist.

6. Brennstoffzelle (2) nach einem der vorstehenden Ansprüche, **dadurch gekennzeichnet, dass**
die Bipolarplatten (40) von einem zweiten Abfuhrkanal (62) zur Abfuhr des Oxidationsmittels durchbrochen sind, wobei
die zweite Verteilstruktur (60) sich an eine zweiten Kante (68) des zweiten Abfuhrkanals (62) anschließt, und
die zweite Elektrode (22) sich an der Membran (18) entlang in einem Bereich erstreckt, welcher
von der zweiten Kante (68) des zweiten Abfuhrkanals (62) beabstandet ist.

7. Brennstoffzelle (2) nach Anspruch 6, **dadurch gekennzeichnet, dass** die zweite Verteilstruktur (60)
einen an die zweite Kante (67) des zweiten Zufuhrkanals (64) anschließenden zweiten Einströmbereich (69) und
einen an die zweite Kante (68) des zweiten Abfuhrkanals (62) anschließenden zweiten Ausströmbereich (61) aufweist, wobei zwischen dem zweiten Einströmbereich (69) und dem zweiten Ausströmbereich (61) ein zweiter Hauptverteilbereich (63) angeordnet ist, welcher einen rechteckigen Querschnitt aufweist.

8. Brennstoffzelle (2) nach Anspruch 7, **dadurch gekennzeichnet, dass** die zweite Elektrode (22) sich an der Membran (18) entlang in einem Bereich erstreckt, welcher
von dem zweiten Einströmbereich (69) und von dem zweiten Ausströmbereich (61) beabstandet ist.

9. Brennstoffzelle (2) nach einem der vorstehenden Ansprüche, **dadurch gekennzeichnet, dass**
die Elektroden (21, 22) deckungsgleich an der Membran (18) angeordnet sind.

10. Verwendung einer Brennstoffzelle (2), nach einem der vorstehenden Ansprüche in einem Elektrofahrzeug (EV).

## Claims

1. Fuel cell (2) comprising
at least one membrane electrode unit (10) having a first electrode (21) and a second electrode (22), separated from one another by a membrane (18), and
at least two bipolar plates (40) that adjoin the membrane electrode unit (10) on either side, wherein the bipolar plates (40) are interrupted by a first feed conduit (52) for supply of a fuel and by a second feed conduit (64) for supply of an oxidant, wherein a first distribution structure (50) facing the first electrode (21) adjoins a first edge (57) of the first feed conduit (52), and
a second distribution structure (60) facing the second electrode (22) adjoins a second edge (67) of the second feed conduit (64), wherein
the first electrode (21) extends along the membrane (18) in a region spaced apart from the first edge (57) of the first feed conduit (52), and in that
the second electrode (22) extends along the membrane (18) in a region spaced apart from the second edge (67) of the second feed conduit (64),
**characterized in that**
the membrane (18) has regions on both sides which are adjacent to the first feed channel (52) and the second feed channel (64) and which directly adjoin the first distribution structure (50) or the second distribution structure (60) and are free of the electrodes (21, 22).

2. Fuel cell (2) according to Claim 1, **characterized in that** the membrane (18) is permeable to water vapour.

3. Fuel cell (2) according to either of the preceding claims, **characterized in that**
the bipolar plates (40) are interrupted by a first drain conduit (54) for draining of the fuel, wherein the first distribution structure (50) adjoins a first edge (58) of the first drain conduit (54), and
the first electrode (21) extends along the membrane (18) in a region spaced apart from the first edge (58) of the first drain conduit (54).

4. Fuel cell (2) according to Claim 3, **characterized in that**
the first distribution structure (50) has
a first inflow region (51) that adjoins the first edge (57) of the first feed conduit (52) and
a first outflow region (59) that adjoins the first edge (58) of the first drain conduit (54), wherein
a first main distribution region (53) having a rectangular cross section is disposed between the first inflow region (51) and the first outflow region (59) .

5. Fuel cell (2) according to Claim 4, **characterized in that**
the first electrode (21) extends along the membrane (18) in a region spaced apart from the first inflow region (51) and from the first outflow region (59).

6. Fuel cell (2) according to any of the preceding claims, **characterized in that**
the bipolar plates (40) are interrupted by a second drain conduit (62) for draining of the oxidant, where the second distribution structure (60) adjoins a second edge (68) of the second drain conduit (62), and
the second electrode (22) extends along the membrane (18) in a region spaced apart from the second edge (68) of the second drain conduit (62).

7. Fuel cell (2) according to Claim 6, **characterized in that**
the second distribution structure (60) has
a second inflow region (69) that adjoins the second edge (67) of the second feed conduit (64) and
a second outflow region (61) that adjoins the second edge (68) of the second drain conduit (62), where
a second main distribution region (63) having a rectangular cross section is disposed between the second inflow region (69) and the second outflow region (61).

8. Fuel cell (2) according to Claim 7, **characterized in that**
the second electrode (22) extends along the membrane (18) in a region spaced apart from the second inflow region (69) and from the second outflow region (61).

9. Fuel cell (2) according to any of the preceding claims, **characterized in that**
the electrodes (21, 22) are in a congruent arrangement with the membrane (18).

10. Use of a fuel cell (2) according to any of the preceding claims in an electrical vehicle (EV).

## Revendications

1. Pile à combustible (2), comprenant
au moins une unité d'électrode à membrane (10) pourvue d'une première électrode (21) et d'une deuxième électrode (22) qui sont séparées l'une de l'autre par une membrane (18), et
au moins deux plaques bipolaires (40) qui se raccordent des deux côtés à l'unité d'électrode à membrane (10),
les plaques bipolaires (40) étant transpercées par un premier canal d'alimentation (52) servant à l'alimentation en combustible et par un deuxième canal d'alimentation (64) servant à l'alimentation en agent oxydant,
une première structure de répartition (50) qui fait face à la première électrode (21) se raccordant à une première arête (57) du premier canal d'alimentation (52) et une deuxième structure de répartition (60) qui fait face à la deuxième électrode (22) se raccordant à une deuxième arête (67) du deuxième canal d'alimentation (64),
la première électrode (21) s'étendant le long de la membrane (18) dans une zone qui est espacée de la première arête (57) du premier canal d'alimentation (52) et
la deuxième électrode (22) s'étendant le long de la membrane (18) dans une zone qui est espacée de la deuxième arête (67) du deuxième canal d'alimentation (64),
**caractérisée en ce que**
la membrane (18) possède des deux côtés des zones qui sont placées adjacentes au premier canal d'alimentation (52) et au deuxième canal d'alimentation (64), qui sont directement contiguëes de la première structure de répartition (50) ou de la deuxième structure de répartition (60) et qui sont dépourvues des électrodes (21, 22).

2. Pile à combustible (2) selon la revendication 1, **caractérisée en ce que** la membrane (18) est perméable à la vapeur d'eau.

3. Pile à combustible (2) selon l'une des revendications précédentes, **caractérisée en ce que**
les plaques bipolaires (40) sont transpercées par un premier canal d'évacuation (54) servant à l'évacuation du combustible,
la première structure de répartition (50) se raccordant à une première arête (58) du premier canal d'évacuation (54) et
la première électrode (21) s'étendant le long de la membrane (18) dans une zone qui
est espacée de la première arête (58) du premier canal d'évacuation (54).

4. Pile à combustible (2) selon la revendication 3, **caractérisée en ce que** la première structure de répartition (50)
possède une première zone de flux entrant (51) qui se raccorde à la première arête (57) du premier canal d'alimentation (52) et une première zone de flux sortant (59) qui se raccorde à la première arête (58) du premier canal d'évacuation (54),
une première zone de répartition principale (53) étant disposée entre la première zone de flux entrant (51) et la première zone de flux sortant (59), laquelle possède une section transversale rectangulaire.

5. Pile à combustible (2) selon la revendication 4, **caractérisée en ce que** la première électrode (21) s'étend le long de la membrane (18) dans une zone qui
est espacée de la première zone de flux entrant (51) et de la première zone de flux sortant (59).

6. Pile à combustible (2) selon l'une des revendications précédentes, **caractérisée en ce que**
les plaques bipolaires (40) sont transpercées par un deuxième canal d'évacuation (62) servant à l'évacuation de l'agent oxydant,
la deuxième structure de répartition (60) se raccordant à une deuxième arête (68) du deuxième canal d'évacuation (62) et
la deuxième électrode (22) s'étendant le long de la membrane (18) dans une zone qui
est espacée de la deuxième arête (68) du deuxième canal d'évacuation (62).

7. Pile à combustible (2) selon la revendication 6, **caractérisée en ce que** la deuxième structure de répartition (60)
possède une deuxième zone de flux entrant (69) qui se raccorde à la deuxième arête (67) du deuxième canal d'alimentation (64) et une deuxième zone de flux sortant (61) qui se raccorde à la deuxième arête (68) du deuxième canal d'évacuation (62),
une deuxième zone de répartition principale (63) étant disposée entre la deuxième zone de flux entrant (69) et la deuxième zone de flux sortant (61), laquelle possède une section transversale rectangulaire.

8. Pile à combustible (2) selon la revendication 7, **caractérisée en ce que** la deuxième électrode (22) s'étend le long de la membrane (18) dans une zone qui
est espacée de la deuxième zone de flux entrant (69) et de la deuxième zone de flux sortant (61).

9. Pile à combustible (2) selon l'une des revendications précédentes, **caractérisée en ce que** les électrodes (21, 22) sont disposées de manière coïncidente sur la membrane (18).

10. Utilisation d'une pile à combustible (2) selon l'une de revendications précédentes dans un véhicule électrique (EV) .
